# EUROPEAN PATENT SPECIFICATION

(11) **EP 2 710 884 B1**
(45) Date of publication and mention of the grant of the patent: **30.05.2018**
(21) Application number: 13185846.6
(22) Date of filing: 24.09.2013
(51) Int. Cl.: A01G 7/04, A01B 45/00

(54) **Maintenance apparatus for a grass surface in a sports facility, especially a soccer field**
Pflegevorrichtung einer Grasfläche in einer Sportanlage, insbesondere ein Fußballfeld
Appareil d'entretien du gazon dans une installation de sport, en particulier un terrain de football

(30) Priority: 24.09.2012 IT BO20120510
(43) Date of publication of application: 26.03.2014
(73) Proprietor: Eco-Program S.p.A., Alzano Scrivia (IT)
(72) Inventor: Barabino, Gianluca, 98000 Montecarlo (MC); Feltri, Paolo, 15055 Pontecurone (IT)
(74) Representative: Boggio, Luigi

(56) References cited:
- WO-A1-00/57689
- DE-A1-102004 019 049
- FR-A- 1 479 568
- US-B1- 6 431 475

## Description

The present invention relates to an apparatus for the maintenance of a grass surface in a sport facility.

However, since the present invention has an advantageous, but not exclusive use on soccer pitches, the description which follows will refer explicitly to soccer pitches, without thereby losing its general nature.

As known, there are many sport facilities, such as golf courses, soccer pitches, etc., which require a high-quality grass surface.

Several decades ago, there was a shift from natural grass surfaces to surfaces in which the grass was manufactured by means of drawing plastic materials.

Said plastic grass surfaces, for a series of technical and regulatory reasons, are not suitable in certain circumstances, where a natural grass surface or a combined synthetic grass/natural grass surface is required.

Furthermore, it has been found that, on soccer pitches with particularly high grandstands, sunlight hits only part of the grass surface in rotation, while leaving the rest in the shade.

This is the principal cause of incorrect exposure of the grass to sunlight and to its consequent stunted and irregular growth.

This is the reason why it was decided some time ago to light the grass surface artificially, in order to trigger its even growth.

Obviously, artificial lighting of the grass surface takes place when the soccer pitch is not being used.

However, the current systems are extremely expensive and require complete redesign of the sport facility. Furthermore, the systems in use do not encourage chlorophyll photosynthesis of the grass effectively.

It has been found theoretically, and also confirmed through experiments, that, in this type of sport facility, chlorophyll photosynthesis is not only accelerated by use of lights emitted by certain lamps, but also by induced air currents which hit the grass surface directly from above. The oxygen contained in these induced air currents considerably accelerates the photosynthesis process, improving the growth and integrity of the grass surface.

For instance, in the document WO-00/57689) (MOBILT DRIVHUS) illustrates an apparatus for the maintenance of a grass surface in a sport facility, in particular in a soccer pitch; the apparatus comprises a bearing structure and lighting means, which are suited to emit an artificial light; wherein the apparatus comprises lighting means associated to ventilation means, which are mounted on the bearing structure and are suited to help the grass belonging to the grass surface grow.

Therefore, the present invention is based on the above principles and is intended to solve the problems presented by the current facilities by realising an apparatus for the maintenance of a grass surface of a sport facility which is easy and inexpensive to realise.

Thus, according to the present invention an apparatus for the maintenance of a grass surface in a sport facility, particularly a soccer pitch, has been provided according to what is claimed in claim 1, or any one of the claims directly or indirectly dependent on claim 1.

For a better understanding of the present invention, a preferred and non-limiting embodiment is described below, with reference to the appended drawings, wherein:
- Figure 1 shows a plan view of an apparatus for maintenance of a grass surface in a sport facility realised according to the dictates of the present invention;
- Figure 2A shows a cross-section A-A (made on Figure 1), in a first configuration (with retracted wings), of the apparatus shown in Figure 1;
- Figure 2B shows a cross-section A-A (made on Figure 1), in a second configuration (with open wings), of the apparatus shown in Figure 1; and
- Figure 3 shows a cross-section B-B also made on the plan of Figure 1.

In the enclosed figures, reference number 10 is used to denote, in its entirety, an apparatus for maintenance of a grass surface (MTE) in a sport facility realised according to the dictates of the present invention.

The apparatus 10 comprises a bearing structure 11 substantially shaped as a trolley.

In particular, the trolley may be a self-propelled trolley, i.e. provided with its own means of movement.

In particular, the bearing structure 11 comprises, in turn, a central reticular truss 12, mounted on two trolleys 13A, 13B. Each trolley 13A, 13B comprises a pair of wheels (WL1), (WL2) and, respectively, (WL3), (WL4).

To each wheel 13A, 13B is attached a relative fifth wheel (RL1), (RL2) of connection with the central reticular truss 12, which allows rotation of each trolley 13A, 13B, with respect to said central reticular truss 12, around a respective vertical axis (Y1), (Y2).

This allows better adaptation of the trolleys 13A, 13B to the effective road surface on which the apparatus 10 must be moved.

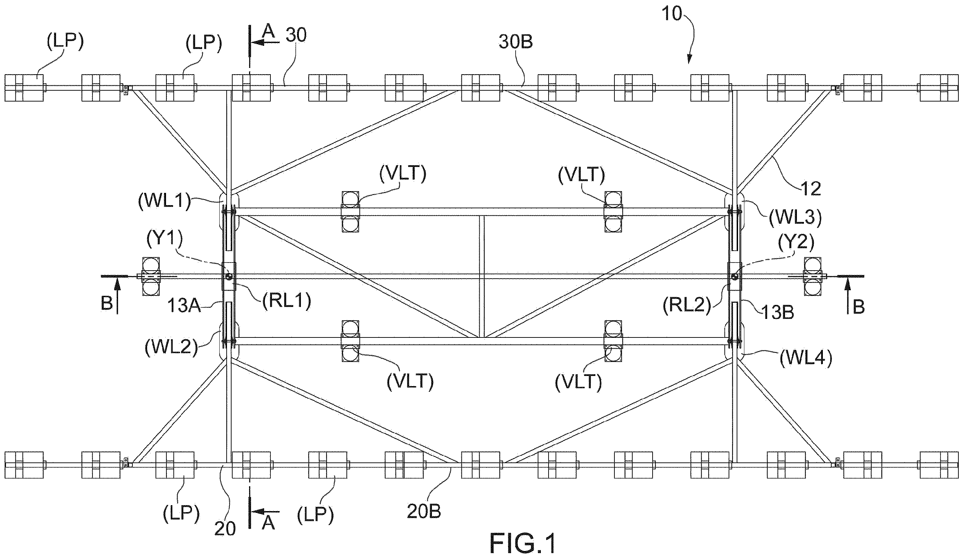

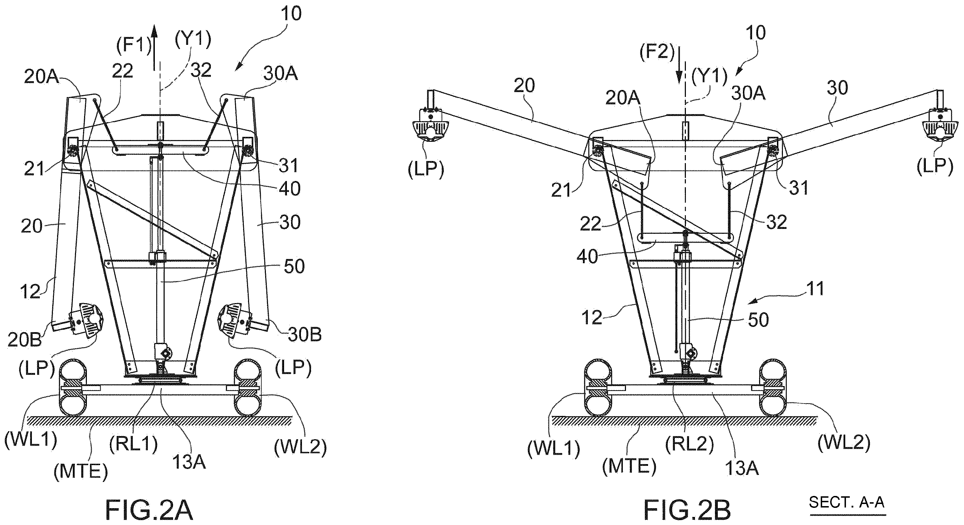

As shown, in particular, in figures 1, 2A, 2B, two lateral wings 20, 30 are hinged to the central reticular truss 12 by means of hinges.

The wing 20 is hinged to the central reticular truss 12 by means of at least two hinges, of which only one, hinge 21, is visible in figures 2A, 2B.

Similarly, said wing 30 is hinged to the central reticular truss 12 by means of at least two hinges, of which only one, hinge 31, is visible in figures 2A, 2B.

As again shown in figures 2A, 2B, and in relation to the trolley 13A, the ends 20A, respectively, 30A, of the wings 20, 30, are connected by means of tie rods 22, respectively, 32, to a bar 40, moved vertically along the axis (Y1), by an actuator 50. The actuator 50 may be the electric, pneumatic, hydraulic, etc., type.

In particular, when the stem of the actuator 50 moves upwards (arrow (F1); figure 2A), the wings 20, 30 lower; whereas, when the stem of the actuator 50 moves downwards (arrow (F2); figure 2B) the wings 20, 30 rise.

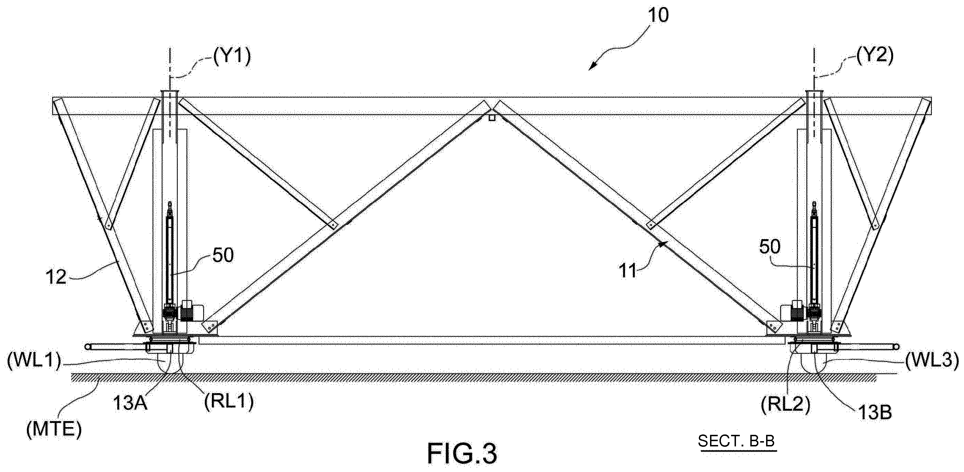

Similar reasoning may be made for trolley 13B (Figure 1, 3).

The fact of being able to retract or open the wings 20, 30 facilitates transportation of the apparatus 10, in the sense that, when said apparatus 10 must be moved or stored, the wings 20, 30 preferably fold, as illustrated in Figure 2A, whereas, in contrast, when the apparatus 10 is in use, i.e. when light and/or ventilated air must be supplied to the grass surface (MTE), the wings 20, 30 must be unfolded (Figure 2B).

As shown in Figure 1, in particular, the edges 20B, respectively 30B, of the wings 20, 30, are provided with a plurality of lighting means (LP) of the type used in these applications.

The preliminary technical lighting project could be devised, for example, on the basis of the principal parameter, represented by the so-called ***"Photosynthetic Photon Flux* Density",** known by the acronym **PPFD,** and by the so-called ***"Daily Light Integral",*** known by the acronym **DLI.**

The following values could be used for preliminary development:
**PPFD** : 300 ∝mol/m²/s
**DLI** : 25,9 ∝mol/m²/day (determined on the basis of 24h/d).

Taking the above values into account, the necessary light flux could be determined, which must be achieved by means of special lighting sources (spectrum optimised in the wavelengths most effective for the purpose).

For the purpose of the preliminary project, it could be hypothesized to use Philips® light sources (such as Master Green Power®), or Light Interaction Agro®, which guarantee the ratio 1∝mol/m²/s/76 lux (this would give an average lighting level of at least 20000, in particular 22000 lux).

Obviously, without deviating from the area of the present invention, the lighting means (LP) may also be attached to any part of the central reticular truss 12 and/or at least one part of any one of wings 20, 30.

One of the most interesting aspects of the present invention is the use of ventilation means (VLT) which, for ease of representation, have all been shown attached to the central reticular truss 12, but which, obviously, may also be blocked on at least one portion of any one of wings 20, 30.

The ventilation means (VLT) are advantageously with a vertical flow of blown air.

Furthermore, in an embodiment not shown, at least several ventilation means are provided with movement devices which move the ventilation means or cause them to pivot, with the purpose of more even dispersion of the air blown onto the grass surface (MTE).

It may be noted that ventilation of the grass surface (MTE):
- improves oxygenation of the "top soil" layer;
- serves to mitigate surface temperatures and improves their distribution;
- the ventilation air forms parts of the metabolising process of photosynthesis;
- the supply of air accentuates penetration into the lower layers of the grass, covered by the higher grass; and
- the supply of air reduces relative humidity and therefore offers effective protection against fungal attacks.

In the attempt to guarantee a supply of ventilated air in the deeper layers of grass as well and which allows all the aforementioned advantages, it has been seen in experiments that the optimal growth values of the grass surface (MTE) are obtained when the speed of the ventilated air is within a *range* between 0.011 m3/s/m2 and 0.023 m3/s/m2; considering that each apparatus 10 (which with the wings open occupies a surface area of around 40 m2) has an area of influence of each of around 65 m2.

In any case, with a potentiometer, controlled by an electronic control panel (not shown), it is possible to vary empirically the speed of rotation of the fans of the ventilation means (VLT) to obtain satisfactory growth of the grass surface (MTE) with all types of climate and configuration of the sport facility.

In an alternative embodiment of the present invention (not shown), it is possible to vary the distance from the grass surface of the lighting means and/or the vertical flow ventilation means.

Furthermore, the following characteristics may be found, possibly in combination with each other and/or possibly in combination with the characteristics described above with reference to the appended drawings:
1- Installation of an electronic control panel arranged to manage, on the basis of the environmental conditions founds, the power of the ventilators.
2- Possibility of varying the humidity percentage of the ventilated air and mixing substances for increasing growth of the grass surface with the air.
3- Installation on the bearing structure of a protective cover of the grass surface from the sun's rays.
4- Centralised coordination of functioning of a plurality of apparatuses which are equipped for simultaneous maintenance of the same grass surface.
5- Installation on the apparatus of a heating system of the grass surface.

In any case, one of the principal advantages of the present apparatus consists in the fact of allowing optimal and even growth of the grass surface, due to the synergic effect of the artificial light combined with ventilation.

## Claims

1. An apparatus (10) for the maintenance of a grass surface (MTE) in a sport facility, in particular in a soccer pitch; the apparatus (10) comprising a bearing structure (11) and lighting means (LP), which are suited to emit an artificial light;
said apparatus (10) further comprising lighting means (LP) associated to ventilation means (VLT), which are mounted on said bearing structure (11) and are suited to help the grass belonging to the grass surface (MTE) grow;
said apparatus (10) **being characterised in that** said bearing structure (11), substantially shaped as a self-propelled trolley, comprises a central reticular truss (12), on which two lateral wings (20, 30) are mounted, which are hinged to said central reticular truss (12).

2. The apparatus (10) according to claim 1, **characterised in that** said lighting means (LP) and/or said ventilation means (VLT) are mounted on said central reticular truss (12) and/or on at least one of said two lateral wings (20, 30).

3. The apparatus (10) according to claims 1 or 2, **characterised in that** the lifting/lowering of said lateral wings (20, 30) is performed by means of actuating means (50).

4. The apparatus (10) according to any of the previous claims, **characterised in that** the speed of the ventilated air ranges from 0.011 m3/s/m2 to 0.023 m3/s/m2.

5. The apparatus (10) according to any of the previous claims, **characterised in that** said lighting means (LP), which are suited to emit an artificial light, guarantee an average lighting level of at least 20000, in particular 22000 lux.

## Patentansprüche

1. Vorrichtung (10) zur Pflege einer Grasfläche (MTE) einer Sportanlage, insbesondere eines Fußballfeldes;
wobei die Vorrichtung (10) eine Tragstruktur (11) und Leuchtmittel (LP), die geeignet sind, künstliches Licht zu emittieren umfasst; wobei die Vorrichtung (10) ferner Belüftungsmitteln (VLT) zugeordnete Leuchtmittel (LP) umfasst, an der Tragstruktur (11) angebracht und geeignet das Wachsen des zu der Grasfläche (MTE) gehörenden Grases zu unterstützen;
wobei die Vorrichtung (10) sich dadurch auszeichnet, dass die Tragstruktur (11) im Wesentlichen als selbstfahrender Wagen ausgebildet ist, ein zentrales Tragwerk (12) umfasst, an dem zwei seitliche Flügel (20, 30) montiert sind/werden, die an das zentrale Tragwerk (12) abgelenkt sind/werden.

2. Vorrichtung (10) nach Anspruch 1, **dadurch gekennzeichnet, dass** die Leuchtmittel (LP) und/oder die Belüftungsmittel (VLT) auf dem zentralen Tragwerk (12) und/oder an mindestens einem der beiden Seitenflügel (20, 30) montiert sind/werden.

3. Vorrichtung (10) nach Anspruch 1 oder 2, **dadurch gekennzeichnet, dass** das Heben/Senken der Seitenflügel (20, 30) mittels Betätigungsmitteln (50) bewirkt ist/wird.

4. Vorrichtung (10) nach einem der vorhergehenden Ansprüche, **dadurch gekennzeichnet, dass** die Geschwindigkeit der Belüftungsmittel-beaufschlagten Luft im Bereich von 0,011 m³/s/m² bis 0,023 m³/s/m² liegt.

5. Vorrichtung (10) nach einem der vorhergehenden Ansprüche, **dadurch gekennzeichnet, dass** die zur Emission eines Kunstlichts geeigneten Leuchtmittel (LP), einen mittleren Leuchtgrad von mindestens 20000, insbesondere 22000 Lux gewährleisten.

## Revendications

1. Appareil (10) pour l'entretien d'une surface engazonnée (MTE) dans une installation de sport, en particulier un terrain de football ; l'appareil (10) comprenant une structure de support (11) et des moyens d'éclairage (LP), lesquels sont adaptés pour émettre une lumière artificielle ;
ledit appareil (10) comprenant en outre des moyens d'éclairage (LP) associés à des moyens de ventilation (VLT), lesquels sont montés sur ladite structure de support (11) et sont adaptés pour favoriser la pousse du gazon de la surface engazonnée (MTE) ;
ledit appareil (10) **étant caractérisé en ce que** ladite structure de support (11), se présentant globalement sous la forme d'un chariot autopropulsé, comprend une poutre réticulée centrale (12), sur laquelle deux ailes latérales (20, 30) sont montées, lesquelles sont articulées sur ladite poutre réticulée centrale (12).

2. Appareil (10) selon la revendication 1, **caractérisé en ce que** lesdits moyens d'éclairage (LP) et/ou lesdits moyens de ventilation (VLT) sont montés sur ladite poutre réticulée centrale (12) et/ou sur au moins l'une desdites deux ailes latérales (20, 30).

3. Appareil (10) selon les revendications 1 ou 2, **caractérisé en ce que** l'élévation/l'abaissement desdites ailes latérales (20, 30) est effectué à l'aide d'un moyen d'actionnement (50).

4. Appareil (10) selon l'une quelconque des revendications précédentes, **caractérisé en ce que** la vitesse de l'air ventilé est comprise entre 0,011 m³/s/m² et 0,023 m³/s/m².

5. Appareil (10) selon l'une quelconque des revendications précédentes, **caractérisé en ce que** lesdits moyens d'éclairage (LP), lesquels sont adaptés pour émettre une lumière artificielle, garantissent un niveau d'éclairage moyen d'au moins 20 000 lux, en particulier de 22 000 lux.
